# FASCICULE DE BREVET EUROPEEN

(11) **EP 0 718 130 B1**
(45) Date de publication et mention de la délivrance du brevet: **14.02.2001**
(21) Numéro de dépôt: 94402956.0
(22) Date de dépôt: 20.12.1994
(51) Int. Cl.: B60G 15/06, F16F 13/24

(54) **Méthode de modulation d'un ensemble modulaire de liaison élastique formant attache d'amortisseur et bloc filtrant**
Methode zur Modulation einer elastischen modularen Befestigungs- und Filtereinheit zur Stossdämpferbefestigung
Method for modulating a modular assembly for elastic connection forming shock absorber mount and filtering bloc

(43) Date de publication de la demande: 26.06.1996
(73) Titulaire: MICHELIN AVS, 78000 Versailles (FR)
(72) Inventeur: Charette, Christian, F-03400 Yzeure (FR); de Fontenay, Etienne, F-58300 Decize (FR)
(74) Mandataire: Peuscet, Jacques

(56) Documents cités:
- EP-A- 0 386 735
- EP-A- 0 392 513
- FR-A- 2 357 790
- FR-A- 2 572 338
- FR-A- 2 658 887
- FR-A- 2 706 558
- GB-A- 2 188 699
- US-A- 3 403 899
- PATENT ABSTRACTS OF JAPAN vol. 11, no. 247 (M-615) (2694) 12 Août 1987 & JP-A-62 056 641 (KAYABA) 12 Mars 1987
- PATENT ABSTRACTS OF JAPAN vol. 7, no. 177 (M-233) (1322) 5 Août 1983 & JP-A-58 081 240 (TOGO KOGYO) 16 Mai 1983
- PATENT ABSTRACTS OF JAPAN vol. 12, no. 149 (M-694) (2996) 10 Mai 1988 & JP-A-62 270 844 (HONDA) 25 Novembre 1987
- PATENT ABSTRACTS OF JAPAN vol. 14, no. 198 (M-965) (4141) 23 Avril 1990 & JP-A-02 038 729 (BRIDGESTONE) 8 Février 1990

## Description

L'invention concerne le domaine des liaisons élastiques intervenant dans les suspensions, en particulier les suspensions de roues et de moteur de véhicules. Elle est, plus précisément, une application de l'amortissement hydraulique et/ou pneumatique à ladite liaison élastique en tant qu'attache de suspension entre la tige d'un amortisseur de véhicule et le chassis de ce dernier.

Dans toute suspension de roues d'un train classique, lorsqu'un ressort assure la flexibilité verticale, le pivotement est permis par appui complémentaire d'une coupelle sur une butée a billes qui transmet la charge permanente à la caisse. Cette fixation complémentaire a, comme celle de la tige d'amortisseur qui lui est coaxiale, besoin d'un filtrage limitant les vibrations transmises à travers le ressort. Cette fonction est très généralement assurée par des pièces en caoutchouc vulcanisé, intimement liées à la coupelle et à la bague de fixation correspondante.

Les pièces élastiques assurant ces fonctions ont fait l'objet de nombreux perfectionnements, parmi lesquels le dispositif décrit par le document EP-A-0 249 369 de General Motors, qui perfectionne, exclusivement, la liaison élastique entre la tige d'amortisseur et le chassis, en limitant les déformations dynamiques par des rondelles de butée, tandis que les efforts de fin de course sur une butée d'amortisseur doivent s'exercer au moyen d'une autre coupelle rigide, la charge permanente n'étant pas reprise dans cette disposition.

D'une manière opposée, le document FR-A-2 583 126 de Honda décrit un dispositif qui incorpore une butée de roulement pour porter la charge permanente du ressort de suspension, mais n'assure un bon filtrage des vibrations acoustiques que pour la tige d'amortisseur, au moyen d'un "neutraliseur de vibrations".

Au contraire, le dispositif qui est décrit dans le document DE-A-3 034 743 de Continental combine, en une pièce complexe, l'appui permanent - à travers une butée de roulement - du ressort de suspension ainsi que la bague élastique où s'exerce la force de liaison, dynamiquement alternée, entre la tige d'amortisseur et l'appui sur caisse. Dans cette conception, les efforts de fin de course dynamique s'exercent sur la fixation de la tige d'amortisseur, du fait de la présence d'une butée de caoutchouc, et non à travers le roulement à billes, qui porte une charge de variation faible, car modulée exclusivement par la flexibilité du ressort, même en débattements rapides.

D'une manière analogue, le document FR-A-2 563 302 de Volvo décrit un dispositif, dénommé monture de jambe de suspension, dans lequel un petit espace permet un court déplacement libre entre butées, à l'intérieur d'une fixation supérieure de tige d'amortisseur qui porte aussi la charge permanente du ressort.

Des perfectionnements, introduisant un amortissement hydraulique sur le point de fixation supérieure d'un amortisseur, portent toujours sur l'attache de la tige d'amortisseur et reçoivent l'effort de butée dynamique en fin de course par suite du choc du tube de l'amortisseur sur une butée en élastomère appropriée.

Cette voie pour améliorer le confort vibratoire sous l'effet de sollicitations de la roue est décrite dans les documents FR-A-2 587 774 et FR-A-2 623 866 de Tokai Rubber.

Ces perfectionnements s'appliquent encore exclusivement à la liaison de la tige d'amortisseur sur la caisse, ou application analogue. Le dispositif assemble, en une pièce unique, deux chambres opposées, reliées par un canal de liquide enroulé sur leur diamètre extérieur, canal de grande longueur et de section notable, provoquant un effet inertiel important, sans que la viscosité du liquide qui y est contenu agisse sur les déplacements.

Ces dispositifs, dont les effets d'inertie bloquent la déformation si l'amortisseur exerce des efforts rapides, autorisent, cependant, des débattements lors de mouvements plus lents grâce au guidage, soit par une bague concentrique à la fixation, dont l'élastomère est précontraint pour en améliorer la tenue en fatigue, dans le premier document cité, soit par une partie annulaire à débattement radial, dans le second.

La conception de ces dispositifs atteint donc une grande complexité, pour assurer la seule fonction, très limitée, d'un point de fixation élastique. La satisfaction des autres fonctions requiert, par ailleurs, une complexité analogue, afin d'assurer l'homogénéité du niveau de qualité exigé sur le filtrage acoustique ou vibratoire des liaisons entre le chassis et une suspension d'automobile et la progressivité requise pour l'amortissement.

L'analyse de l'art antérieur montre qu'aucun des dispositifs connus ne remplit, encore, de façon satisfaisante et avec simplicité, l'ensemble de ces fonctions, c'est-à-dire l'amélioration de l'amortissement des vibrations du train du véhicule et de la progressivité des efforts en fonction du déplacement de la liaison de la tige d'amortisseur au chassis du véhicule, tout en réduisant les efforts transmis par le train du véhicule audit chassis, en supprimant les chocs introduits, en fin de course, par les limitations de déplacement le plus souvent génératrices de nuisances acoustiques et en réduisant les frottements qui génèrent une usure des butées de fin de courses en élastomère et induisent donc une altération des performances de la liaison élastique.

Aucune des techniques connues de l'art antérieur ne permet, non plus, d'obtenir, avec un dispositif unique utilisant des moyens simples, une modulation, non seulement des caractéristiques dynamiques, mais également de la rigidité statique et de l'effet d'amortissement.

Les documents JP-A-62-56641 et JP-A-58-81240 décrivent une méthode pour régler la rigidité d'un manchon élastique.

On connaît par FR-A-2 572 338 une attache élastique d'amortisseur sur laquelle le préambule de la revendication 1 est fondé.

L'invention est donc une méthode de modulation d'un ensemble modulable de liaison élastique, formant attache d'amortisseur et bloc filtrant, entre la tige d'un amortisseur de véhicule et une structure à amortir. Il est constitué d'armatures annulaires rigides intimement liées à un ensemble de raccordement en composition élastomérique pour délimiter un volume clos, contenant un fluide de remplissage, ledit ensemble modulable de liaison élastique étant rigidement lié, d'une part, à la tige de l'amortisseur par l'intermédiaire d'une armature inférieure interne et d'une armature supérieure interne, d'autre part à la structure à amortir par l'intermédiaire d'au moins une armature supérieure.

L'invention est caractérisée en ce que le volume clos est délimité par un assemblage à armatures annulaires supérieur et/ou un assemblage à armatures annulaires inférieur, qu'il présente, vis-à-vis de son milieu extérieur, une étanchéité totale, par mise en place d'obturateurs après remplissage, et en ce qu'une modulation des caractéristiques statiques et dynamiques est obtenue par variation de la composition du fluide de remplissage et/ou du volume dudit volume clos qui, coopérant avec l'ensemble de raccordement en composition élastomérique, permet d'une part d'adapter les déplacements relatifs des composants des assemblages à armatures annulaires supérieur et inférieur ainsi que dudit ensemble de raccordement en composition élastomérique, d'autre part de filtrer les vibrations en fonction des exigences de progressivité de l'amortissement.

Selon les variantes de réalisation du dispositif objet de l'invention, le volume clos est constitué d'une chambre annulaire unique ou d'un ensemble de deux chambres annulaires non communicantes.

Selon les cas d'application, le fluide de remplissage du volume clos peut être constitué d'un gaz, d'un liquide homogène ou d'un mélange de liquides, miscibles ou non, de viscosités différentes, d'un liquide en présence d'un gaz, d'un matériau visqueux ou d'un matériau visqueux en présence d'un gaz.

La composition du fluide de remplissage permet, en effet, de moduler les rigidités statique et dynamique, alors que sa viscosité permet de moduler la fonction amortissement.

Dans le but d'adapter au mieux des besoins l'ensemble modulable de liaison élastique, le volume clos peut comporter un système de gestion du fluide de remplissage, qui est constitué soit par un distributeur à plusieurs positions, soit, dans d'autres variantes de réalisation, par un dispositif de pilotage direct, pilotage qui peut se faire par les sollicitations de l'amortisseur ou par celles d'un autre organe participant au mouvement à amortir, constituant, dans ces derniers cas, un ensemble modulable de liaison élastique actif.

Pour satisfaire les contraintes dans les conditions limites d'utilisation, l'ensemble modulable de liaison élastique peut comporter un contact de limitation de course constitué par des butées de fin de course, en composition élastomérique ou autre matériau amortissant, disposées sur l'assemblage à armatures annulaires supérieur et/ou sur l'assemblage à armatures annulaires inférieur.

L'ensemble modulable de liaison élastique selon l'invention ainsi que ses variantes, seront mieux compris à la lecture de la description accompagnant les dessins représentant, à titre d'exemples non limitatifs, des réalisations particulières de l'invention et dans lesquels :
- la figure 1 est une-vue, en coupe axiale, d'un ensemble modulable de liaison élastique selon l'invention, comportant un volume clos constitué de deux chambres annulaires non communicantes ;
- la figure 2 est la vue de dessus de la même variante ;
- la figure 3 est une coupe partielle de l'ensemble modulable de liaison élastique, en version pneumatique, c'est-à-dire dont le fluide de remplissage du volume clos est constitué d'un gaz et illustre le comportement en déflexion du dispositif ;
- la figure 4 est une demi-coupe d'une autre variante de l'ensemble modulable de liaison élastique, à deux chambres annulaires non communicantes, dans la version constituant un ensemble hydropneumatique modulable de liaison élastique, c'est-à-dire dont le fluide de remplissage du volume clos est constitué d'un liquide ou d'un matériau visqueux en présence d'un gaz ; elle illustre le comportement en déflexion du dispositif ;
- la figure 5 illustre, sur un diagramme, la variation des déflexions en fonction des efforts appliqués, pour un ensemble modulable de suspension élastique de type hydropneumatique, comparativement à celle des dispositifs de l'art antérieur ;
- la figure 6 met en évidence, sur une vue en coupe axiale d'une variante hydropneumatique de l'ensemble modulable de liaison élastique, la présence de butées de fin de course en composition élastomérique ;
- la figure 7 représente, en coupe axiale également, une autre variante de l'ensemble modulable de liaison élastique, en version pneumatique, comportant deux chambres annulaires non communicantes, de volume clos réduit, et des butées de fin de course en composition élastomérique ;
- la figure 8 illustre, aussi en coupe axiale, une variante de l'ensemble modulable de liaison élastique, dans laquelle le dispositif présente deux chambres annulaires non communicantes remplies de fluide constitué d'un liquide visqueux en présence de gaz, formant un ensemble hydropneumatique modulable ;
- la figure 9 montre, en coupe axiale également, le raccordement des chambres annulaires constituant le volume clos à un système de gestion du fluide de remplissage dans un ensemble hydroélastique ou hydropneumatique modulable de liaison élastique ;
- la figure 10 est la coupe axiale d'un ensemble hydropneumatique de liaison élastique dont les armatures présentent une forme particulière ;
- la figure 11 illustre une autre disposition spécifique de l'ensemble modulable de liaison élastique dans laquelle est inclus un élément de remplissage extérieur, en composition élastomérique ;
- la figure 12 propose une variante de l'ensemble modulable de liaison élastique, en version hydropneumatique ;
- la figure 13 décrit une variante simplifiée de l'ensemble modulable de liaison élastique, en version-hydropneumatique, dans laquelle le volume clos est constitué d'une chambre annulaire unique.

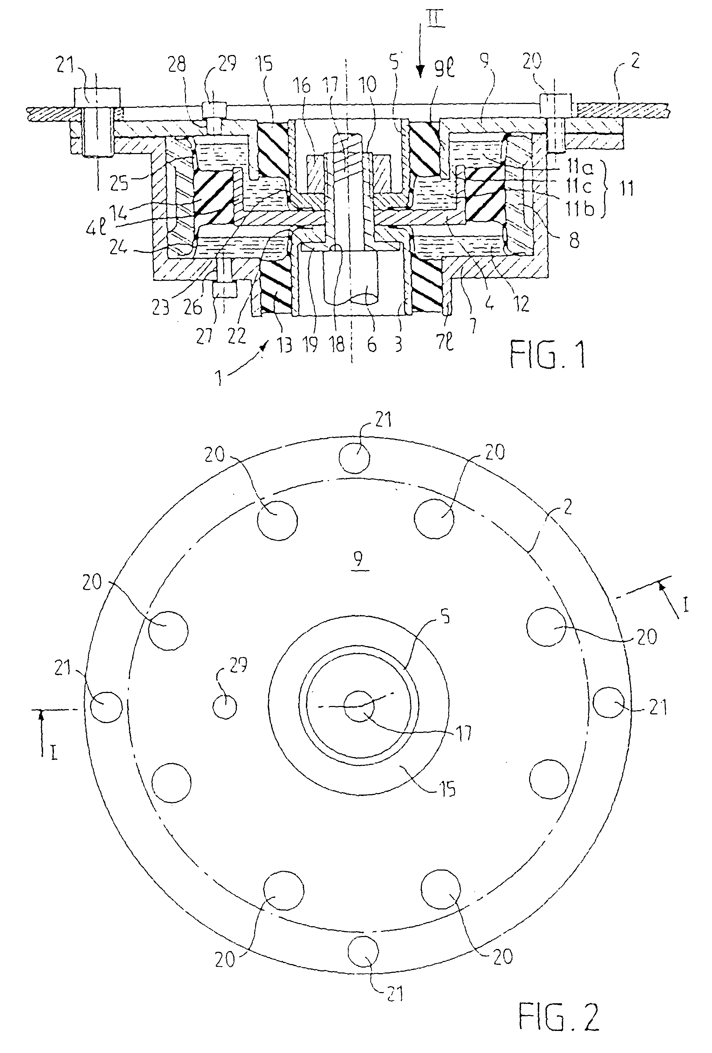

La figure 1 est une vue, en coupe axiale, d'un ensemble modulable de liaison élastique selon l'invention, formant attache d'amortisseur et bloc filtrant entre un amortisseur (1) et une structure à amortir (2), tel que le chassis d'un véhicule, par exemple, la figure 2 étant la vue de dessus correspondante, selon II.

Ledit ensemble modulable de liaison élastique est une pièce de révolution constituée, dans la variante illustrée, d'un assemblage à armatures annulaires supérieur (AS) et d'un assemblage à armatures annulaires inférieur (AI) intimement liés à un ensemble de raccordement en composition élastomérique (RE), pour délimiter un volume clos, comportant une chambre annulaire supérieure (11) et une chambre annulaire inférieure (12).

L'assemblage à armatures annulaires supérieur (AS) est formé d'une armature supérieure (9) en L et d'une armature de liaison interne (4), en forme de L inversé par rapport à l'armature supérieure (9) ; lesdites armatures supérieure (9) et de liaison interne (4) sont intimement liées par la face externe de leurs branches en angles (91, 41), respectivement à une face d'un élément de raccordement élastique supérieur (15) et à une face d'un élément de raccordement élastique intermédiaire (14), tous deux faisant partie de l'ensemble de raccordement en composition élastomérique (RE), pour former les parois de la chambre annulaire supérieure (11).

De manière similaire, l'assemblage à armatures annulaires inférieur (AI) est formé d'une armature inférieure (7) et de l'armature de liaison interne (4) ; l'armature inférieure (7) est liée, par une face de son extrémité (71) à une face d'un élément de raccordement élastique inférieur (13), constituant partiel de l'ensemble de raccordement en composition élastomérique (RE), pour former, en association avec l'armature de liaison interne (4) et l'élément de raccordement élastique intermédiaire (14) les parois de la chambre annulaire inférieure (12).

Les chambres annulaires supérieure (11) et inférieure (12) doivent présenter entre elles et vis-à-vis de leur milieu extérieur une étanchéité totale et définissent le volume clos qui comporte un fluide de remplissage.

L'ensemble ainsi constitué est monté bloqué d'une part sur la tige (6) de l'amortisseur (1), d'autre part sur la structure à amortir (2).

Dans cette réalisation, l'assemblage à armatures annulaires inférieur (AI) est relié à la tige (6) de l'amortisseur (1) au moyen d'une bague (10) montée ajustée sur l'extrémité (17) de la tige (6) et munie d'une collerette (19) qui s'appuie sur un épaulement (18) de ladite tige (6) et sur l'armature inférieure interne (3), cette bague (10) coopérant avec un écrou (16) qui vient bloquer l'ensemble sur la tige (6) en s'appuyant sur l'armature supérieure interne (5), l'armature de liaison interne (4) étant ainsi serrée. L'assemblage à armatures annulaires supérieur (AS) possède des moyens d'assemblage de ses éléments (20) et des moyens de fixation (21) sur la structure à amortir (2). Les moyens d'assemblage et de fixation (20, 21) sont constitués le plus généralement par des vis ou des boulons transversants, les premiers réunissant les armatures inférieure (7) et supérieure (9) qui viennent enfermer l'armature de liaison interne (4), les seconds permettant la fixation au véhicule.

Le montage dudit assemblage à armatures annulaires supérieur (AS) est réalisé par l'intermédiaire d'une armature de liaison externe (8) dont la face interne est intimement liée à la faxe externe de l'élément de raccordement élastique intermédiaire (14) et dont la face opposée vient en appui local, par ses extrémités, sur la face interne de l'armature inférieure (7).

De plus, l'élément de raccordement élastique inférieur (13) et l'élément de raccordement élastique supérieur (15) comportent une languette d'étanchéité (22, 23) disposée entre l'armature de liaison interne (4) d'une part et l'armature inférieure interne (3) ou supérieure interne (5) correspondante d'autre part, et l'élément de raccordement élastique intermédiaire (14) comporte deux languettes annulaires d'étanchéité (24, 25) disposées respectivement entre l'armature de liaison interne (4) d'une part, et l'armature inférieure (7) ou supérieure (9) correspondante d'autre part.

Par ailleurs, l'assemblage à armatures annulaires supérieur (AS) comporte, ici, au moins un obturateur (29), destiné à venir enfermer le fluide de remplissage dans la chambre annulaire supérieure (11) et monté dans l'orifice de remplissage (28) ménagé dans l'armature supérieure (9), comme l'assemblage à armatures annulaires inférieur (AI) comporte au moins un obturateur (27) destiné à venir enfermer le fluide dans la chambre annulaire inférieure (12) et monté dans l'orifice de remplissage (26) ménagé dans l'armature inférieure (7).

Il est bien évident, pour l'homme de l'art, que dans d'autres variantes, le remplissage du volume clos peut être réalisé par des moyens différents, tels que la technique dite "en sous-marin" ou par injection du fluide de remplissage dans les chambres par toute technique appropriée, lesdits moyens rendant non nécessaire la présence des obturateurs (27,29).

Dans la variante décrite, la chambre annulaire supérieure (11) est constituée de deux demi-chambres (11a, 11b) reliées par un passage (11c) ménagé entre les faces internes de la branche en angle (91) de l'armature supérieure (9) et la branche en angle (41) de l'armature de liaison interne (4). Cette disposition permet, entre les parois de la chambre annulaire supérieure (11), un brassage du liquide, sous sollicitation dynamique provoquée par les mouvements de la tige (6) de l'amortisseur (1), brassage qui influe à la fois sur la rigidité dynamique et sur la capacité d'amortissement du dispositif.

Le choix des paramètres géométriques dudit passage (11c) entre les armatures supérieure (9) et de liaison interne (4) permet, en effet, l'optimisation de ladite rigidité dynamique selon les contraintes de l'application, le choix de la viscosité du fluide de remplissage permettant une modulation supplémentaire de l'effet d'amortissement.

Le principe de fonctionnement de l'ensemble modulable de liaison élastique selon l'invention est basé sur la transmission des mouvements de la tige (6) de l'amortisseur (1) par l'armature inférieure interne (3), l'armature de liaison interne (4) et l'armature supérieure interne (5) à l'ensemble de raccordement en composition élastomérique (RE) dont les éléments de raccordement élastique inférieur (13), intermédiaire (14) et supérieur (15) assurent l'isolation des chambres annulaires inférieure (12) et supérieure (11) respectivement, lesdites chambres annulaires (11, 12) étant dépourvues de communication entre elles et contenant un fluide de remplissage comportant au moins un matériau ou visqueux ou liquide ou gazeux, ledit gaz pouvant être de l'air. Les obturateurs (27, 29) des chambres annulaires (11, 12) assurent leur étanchéité vis-à-vis du milieu extérieur, en venant clore les orifices de remplissage (26, 28) qui permettent l'introduction du fluide de remplissage dans le volume clos.

Lorsque les obturateurs (27,29) n'ont pas été mis en place ou ne sont pas serrés, les chambres annulaires supérieure (11) et inférieure (12) sont emplies d'air à la pression atmosphérique et le dispositif se comporte, au point de vue du filtrage et de l'amortissement des vibrations, comme un dispositif de l'art antérieur dans lequel les éléments de raccordement élastique (13, 14, 15) sont sollicités en cisaillement pur.

La courbe résultante des déflexions en fonction des efforts appliqués est alors sensiblement linéaire et le dispositif ne présente pas de limite de débattement dans les conditions extrêmes de sollicitation.

Au contraire, lorsque, selon l'invention, le volume clos est rendu étanche vis-à-vis du milieu extérieur par obturation des orifices de remplissage (26, 28) grâce aux obturateurs (27, 29) des chambres annulaires inférieure (12) et supérieure (11), respectivement, et comme les chambres annulaires supérieure (11) et inférieure (12) sont non communicantes, l'ensemble modulable de liaison élastique se comporte comme un dispositif élastique pneumatique lorsque le fluide de remplissage est un gaz, comme un dispositif hydroélastique lorsque le fluide de remplissage est un liquide ou comme un dispositif élastique hydropneumatique lorsque le fluide de remplissage est constitué partiellement d'un gaz et partiellement d'un liquide.

La modulation des caractéristiques dynamiques de l'ensemble modulable de liaison élastique selon l'invention est obtenue par l'action de deux paramètres, pris isolément ou en combinaison, qui sont la nature du fluide de remplissage du volume clos, définissant sa densité ou sa viscosité, et sa composition, et, plus précisément, dans la version hydropneumatique du dispositif, la proportion volumique relative du gaz et du liquide, la répartition dudit fluide de remplissage dans les deux chambres annulaires (11, 12) pouvant être identique ou différente.

Dans la variante illustrée en figures 1 et 2, le volume clos, constitué de la chambre annulaire supérieure (11) et de la chambre annulaire inférieure (12), comporte un fluide de remplissage constitué d'environ 80% de liquide dans la chambre annulaire supérieure (11) et d'environ 60% de liquide dans la chambre annulaire inférieure (12), le reste du volume desdites chambes étant occupé par un gaz.

Lors du déplacement vertical de la tige (6) de l'amortisseur (1), que ce soit dans le sens ascendant ou dans le sens descendant, le comportement de l'ensemble modulable de liaison élastique selon l'invention peut être décrit par les phases de sollicitations suivantes :

Tout d'abord, sous l'effet du déplacement de la tige (6) de l'amortisseur (1), la sollicitation en cisaillement des éléments de raccordement élastique inférieur (13), intermédiaire (14) et supérieur (15) induit des variations de volume des chambres annulaires inférieure (12) et supérieure (11) respectivement, l'une voyant son volume augmenter alors que l'autre voit son volume se réduire.

Dans celle des chambres annulaires supérieure (11) ou inférieure (12) qui subit une réduction de volume, la partie du fluide de remplissage qui se trouve à l'état gazeux est comprimé, la partie à l'état liquide étant, par définition, incompressible; la compression du gaz crée une force s'opposant au déplacement de la tige (6) de l'amortisseur (1) dont l'intensité croît en fonction de la réduction du volume de la chambre annulaire (11 ou 12).

La loi force-déflexion qui en résulte s'infléchit notablement par rapport à la déformation linéaire décrite précédemment pour le dispositif dont les chambres annulaires se trouvent en communication avec l'atmosphère, correspondant à une rigidification croissante et progressive, ladite progressivité étant une des caractéristiques essentielles de l'ensemble modulable de liaison élastique.

La compression croissant dans la chambre annulaire (11 ou 12), entraîne par l'intermédiaire de la phase liquide du fluide de remplissage, incompressible, la déformation des éléments de raccordement élastique inférieur (13) ou supérieur (15) concerné et de l'élément de raccordement élastique intermédiaire (14) ; la force s'opposant au déplacement de la tige (6) de l'amortisseur prend alors une intensité sensiblement égale à l'effort à exercer pour déformer lesdits éléments de raccordement élastique, effort beaucoup plus important que celui engendré par leur sollicitation en cisaillement. Il en résulte un accroissement substanciel de la rigidification de l'ensemble modulable de liaison élastique.

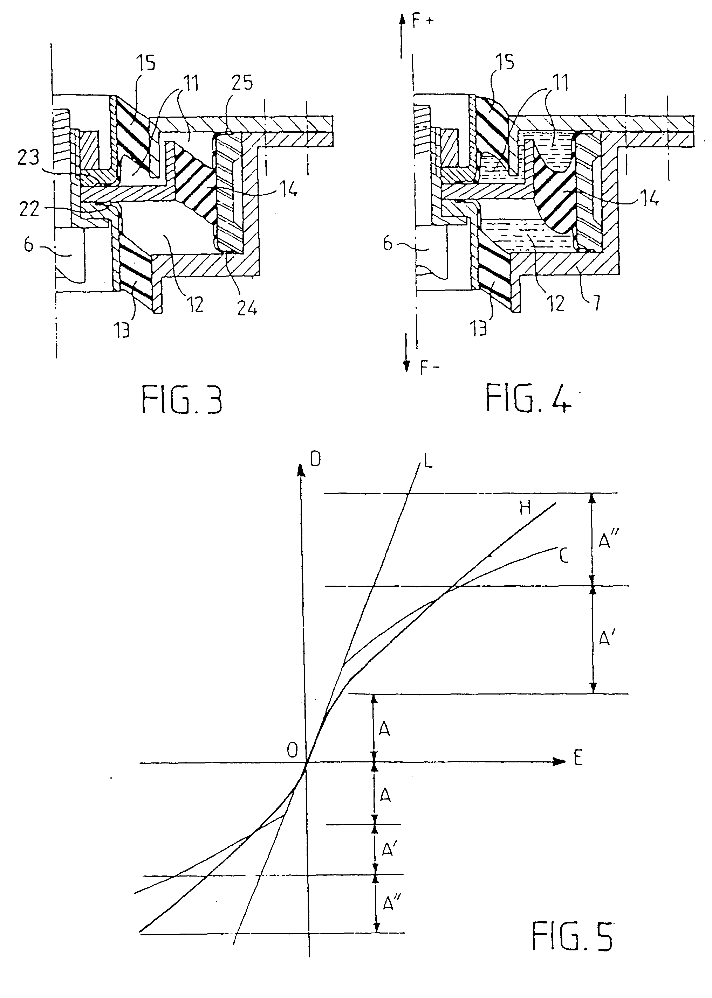

La figure 3 est une coupe partielle de l'ensemble modulable de liaison élastique selon l'invention dont le volume clos est constitué d'une chambre annulaire supérieure (11), et d'une chambre annulaire inférieure (12) ; dans la variante représentée, les deux chambres annulaires (11 et 12) sont remplies d'un fluide gazeux, par exemple de l'air ou de l'azote. La figure illustre, donc, le comportement en déflexion du dispositif dans sa version pneumatique.

Les éléments de raccordement élastique supérieur (15), équipé de sa languette d'étanchéité (23), intermédiaire (14), muni de ses deux languettes annulaires d'étanchéité inférieure (24) et supérieure (25) et l'élément de raccordement élastique inférieur (13), équipé de sa languette d'étanchéité (22), présentent, à l'état de repos, c'est-à-dire en absence de sollicitation, une forme sensiblement parallélépipédique. Sous l'effet des efforts appliqués, le mouvement relatif des constituants de l'assemblage à armatures annulaires supérieur (AS) et de l'assemblage à armatures annulaires inférieur (AI) impose aux composants de l'ensemble de raccordement en composition élastomérique (RE) une déformation en cisaillement conduisant à une section sensiblement en losange, caractéristique de ce type de déformation.

Si les obturateurs (27, 29) des chambres annulaires supérieure (11) et inférieure (12) ne sont pas mis en place dans les orifices de remplissage correspondants (26, 28) ou ne sont pas serrés, lesdites chambres annulaires (11 et 12) se trouvent remplies d'air à la pression atmosphérique puisqu'elles se trouvent en communication avec l'extérieur.

L'ensemble modulable de liaison élastique se comporte alors, au point de vue du filtrage, comme un dispositif de l'art antérieur dans lequel les éléments de raccordement élastique sont sollicités en cisaillement pur, la réponse du système se traduisant par une proportionalité directe des efforts en fonction des déflexions.

Par contre, lorsque, selon l'invention, les chambres annulaires (11, 12) contenant du gaz sont isolées de manière étanche du milieu extérieur par mise en place et serrage des obturateurs (27, 29), l'ensemble modulable de liaison élastique se comporte, du point de vue du filtrage en dispositif élastique pneumatique ; dans ce cas, l'effet d'un déplacement de la tige (6) de l'amortisseur (1), résulte en un déplacement des éléments de raccordement élastique inférieur (13), intermédiaire (14) et supérieur (15) formant l'ensemble de raccordement en composition élastomérique (RE), ce qui induit une variation du volume des chambres annulaires (11, 12). La chambre annulaire supérieure (11) voit, en effet, son volume se réduire alors que la chambre annulaire (12) voit son volume s'accroître lorsque la tige (6) de l'amortisseur (1) effectue un mouvement ascendant, l'évolution du volume des chambres annulaires (11, 12) se faisant dans le sens opposé lorsque la tige (6) de l'amortisseur effectue un mouvement descendant.

Dans la chambre annulaire supérieure (11) par exemple, en cas de mouvement ascendant de la tige (6) de l'amortisseur (1), chambre annulaire dont le volume est réduit, le gaz se trouve comprimé induisant un effort qui s'oppose au déplacement.

Il en résulte un accroissement de rigidité, jusqu'à ce que la compression atteigne une valeur suffisante pour provoquer, comme illustré, la déformation des éléments de raccordement élastique supérieur (15) et intermédiaire (14) qui constituent la partie déformable des parois de ladite chambre annulaire supérieure (11), induisant un accroissement de la rigidité.

L'effet de l'augmentation de volume correspondant de la chambre annulaire inférieure (12) est sans influence notable sur le comportement de l'ensemble modulable de liaison élastique pneumatique ainsi constitué.

La figure 4 est une demi-coupe d'une autre variante de l'ensemble modulable de liaison élastique, à deux chambres annulaires (11, 12) non communicantes, dans la version constituant un ensemble modulable de liaison élastique hydropneumatique. Elle illustre le comportement sous sollicitation du dispositif.

Dans la variante illustrée, la chambre annulaire supérieure (11) est pratiquement remplie d'un liquide, alors que la chambre annulaire inférieure (12) contient un fluide de remplissage constitué d'un liquide et d'un gaz.

La liquide de la chambre annulaire supérieure (11) étant, par définition, incompressible, le seul rôle que pourrait jouer ladite chambre annulaire (11) serait celui d'un amortissement modulable selon la viscosité du liquide, avec une rigidité statique élevée, la chambre annulaire inférieure (12) jouant jouant essentiellement un rôle de filtrage dans les mouvements descendants de la tige (6) de l'amortisseur (1). A cette version qui conduit à une forte rigidité dynamique dans les mouvements ascendants, est généralement préférée une version dans laquelle les deux chambres annulaires (11, 12) contiennent un fluide de remplissage composé, à la fois de liquide ou d'un matériau visqueux et de gaz, même si la proportion volumique de gaz est faible.

Dans la variante illustrée, représentative d'une déformation résultant d'un mouvement ascendant de la tige (6) de l'amortisseur, le volume de la chambre annulaire supérieure (11) se réduit sous l'effet des efforts de cisaillement appliqués et de la déformation des éléments de raccordement élastique concernés (14,15) qui prennent une section sensiblement en forme de losange. La force de compression qui en résulte est transmise par la phase liquide du fluide de remplissage, aux éléments déformables des parois de ladite chambre annulaire supérieure (11), c'est-à-dire les éléments de raccordement supérieur (15) et intermédiaire (14), entraînant une déformation supplémentaire desdits éléments de raccordement (14,15), qui se traduit par un creusement de la face inférieure de l'élément de raccordement élastique supérieur (15) et de la face supérieure de l'élément de raccordement intermédiaire (14) et, en raison de l'incompressibilité volumique des élastomères, par un bombement des faces opposées desdits éléments de raccordement élastique (14, 15).

Le bombement de la face inférieure de l'élément de raccordement élastique intermédiaire (14) peut être utilisé comme butée de fin de course, car lorsque l'ensemble de raccordement en composition élastomérique (RE) se trouve déformé sous l'effet de sollicitations importantes, ledit bombement de la face inférieure de l'élément de raccordement élastique intermédiaire (14) peut venir en contact de la partie de l'armature inférieure (7) qui forme le fond de la chambre annulaire inférieure (12) et ainsi limiter les déformations.

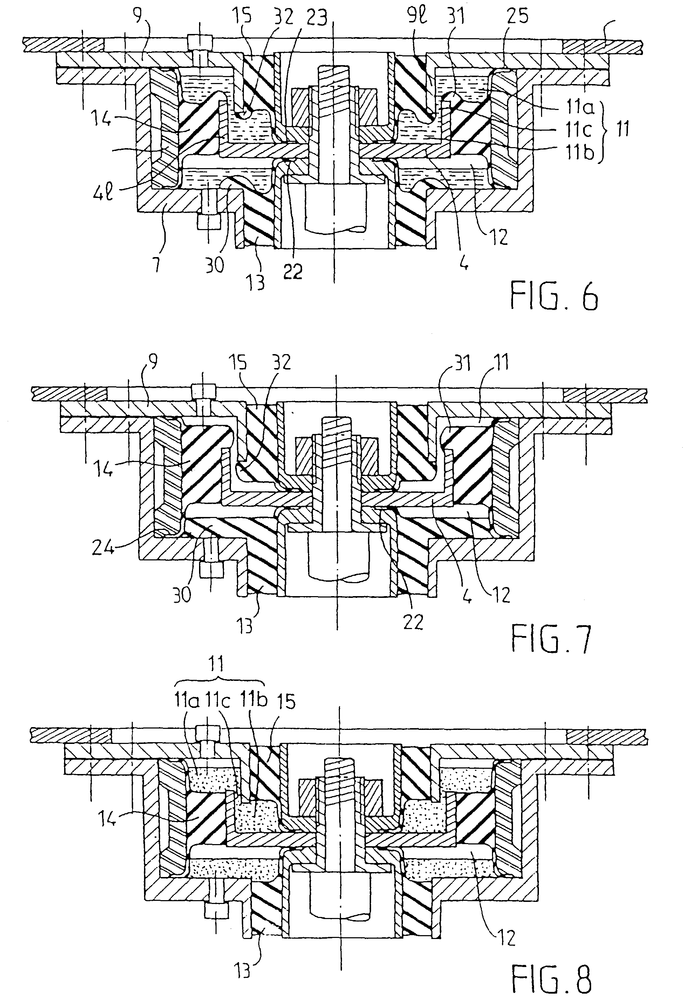

La figure 5 illustre, sur un diagramme la variation des déflexions du dispositif en fonction des efforts appliqués, pour un ensemble modulable de liaison élastique du type hydropneumatique, c'est-à-dire dans lequel chacune des chambres annulaires (11, 12) est remplie d'un fluide de remplissage constitué d'un gaz et d'un liquide.

La figure compare le comportement de l'ensemble modulable de liaison élastique selon l'invention, décrit par la courbe (H) avec celui d'une liaison élastique classique - constitué d'éléments en composition élastomérique, relativement souples, à faible hystérésis, intimement liés à des armatures métalliques qui en limitent les débattements - décrit par la courbe (C) et avec celui d'un dispositif à deux chambres annulaires, de structure similaire à celui de l'invention, mais dans lequel lesdites chambres annulaires sont laissées ouvertes, en communication avec le milieu extérieur, n'apportant, de ce fait, aucun effet pneumatique, comportement décrit par la courbe (L).

Le diagramme de la figure 5 représente, pour chaque type de dispositif, la variation des déflexions, portées sur l'axe (OD) des ordonnées, en fonction des efforts, portés sur l'abscisse (OE). Trois zones, symétriques par rapport à l'abscisse (OE), peuvent être distinguées, dans le domaine des déflexions, selon le comportement des dispositifs en fonction des sollicitations :
- au voisinage de l'origine, les zones (A) correspondent à des déflexions de faible amplitude engendrées par une route peu accidentée présentant un revêtement de bonne qualité ;
- les zones (A') sont des zones transitoires, correspondant à des déflexions de moyenne amplitude, engendrées par les conditions de conduite habituelles ;
- les zones (A") correspondent à des déflexions importantes, positives ou négatives, provoquées par le franchissement d'obstacles, engendrant chocs et rebonds.

Dans les zones (A), les déflexions de faible amplitude sont sensiblement proportionnelles aux efforts et la réponse est à peu près la même que la liaison élastique soit assurée par un dispositif classique, un dispositif à chambres annulaires en communication avec l'atmosphère ou par un ensemble modulable de liaison élastique selon l'invention.

Les courbes (C, L et H) sont donc sensiblement superposées dans ces zones.

Dans les zones transitoires (A'), représentatives des conditions de conduite les plus usuelles, le dispositif à chambres annulaires en communication avec l'atmosphère n'offre pratiquement pas de filtrage, les déflexions restant sensiblement proportionnelles aux efforts. Les liaisons élastiques classiques présentent, elles, un effet de filtrage, la courbe (C) des déflexions en fonction des efforts s'infléchissant notablement, avec un changement de pente brutal, ces phénomènes étant générateurs de bruits et de frottements, donc de nuisance acoustique et d'usure.

Au contraire, l'ensemble modulable de liaison élastique selon l'invention se comporte selon la courbe (H), dont le changement de pente entre les zones (A) et (A') a lieu très progressivement, le filtrage se faisant sans à-coup, donc sans nuisance.

Dans les régions de fortes déflexions, positives ou négatives, c'est-à-dire dans les zones (A"), correspondant à des phénomènes, respectivement, de chocs pour les déflexions positives et de rebonds, pour les déflexions négatives, les dispositifs de liaison élastiques à chambres annulaires en communication avec l'atmosphère ne présentent, comme le montre la courbe (L) dans lesdites régions, ni filtrage ni limitation de débattement ou saturation, les déflexions restant, comme dans les zones (A) et (A'), proportionnelles aux efforts.

Par contre, les liaisons élastiques de type classique associent à un filtrage correct une limitation des débattements grâce à la liaison de l'élastomère au métal, éventuellement complétée d'un dispositif de fin de course, tout comme l'ensemble modulable de liaison élastique selon l'invention dont l'efficacité dans le domaine est, cependant, améliorée grâce à la progressivité des effets.

La modulation des rigidités statique et dynamique, caractéristique essentielle de l'invention, est régie par le type de remplissage du volume clos, c'est-à-dire la composition du fluide de remplissage.

La répartition du volume clos entre les chambres annulaires supérieure (11) et inférieure (12) peut être identique ou différente selon qu'est souhaité, en fonction du sens de déplacement de la tige (6) de l'amortisseur (1), un comportement symétrique ou asymétrique de l'ensemble modulable de liaison élastique selon l'invention.

Afin de mettre en évidence les possibilités de modulation des caractéristiques, a été déterminée l'influence de la composition du fluide de remplissage du volume clos sur la rigidité statique (Ks) ou quasi-statique (aux faibles valeurs de fréquence) de l'ensemble modulable de liaison élastique selon l'invention.

Les résultats en sont rassemblés dans le tableau 1 ci-après, les valeurs de rigidité statique ou quasi-statique correspondant aux zones (A) du diagramme de la figure 5.

Ils sont complétés par les limitations de débattements à environ 1000 daN, correspondant aux zones de fortes sollicitations des zones (A") du même diagramme.

**Tableau 1.**

| Rigidité statique en fonction de la composition du fluide de remplissage du volume clos | | | |
|---|---|---|---|
| Remplissage du volume clos | | Rigidité statique daN/mm | Limitation des débattements mm à 1000 daN |
| % gaz | % liquide | | |
| 100 | 0 | 50 | aucune |
| 60 | 40 | 58 | aucune |
| 40 | 60 | 60 | ± 10 |
| 25 | 75 | 70 | ± 8,5 |
| 10 | 90 | 80 | ± 6,5 |
| 0 | 100 | 340 | ± 3,5 |

Il en résulte que l'accroissement de la proportion de liquide dans le fluide de remplissage du volume clos permet d'agir de façon très nuancée sur la rigidité statique entre la version pneumatique du dispositif et la version hydropneumatique dont le fluide de remplissage du volume clos est constitué de 60% de liquide et de 40% de gaz, la rigidité statique passant, dans ces conditions de 50 à 60 daN/mm, alors que si des variations notables de rigidité statique sont recherchées, la composition du fluide de remplissage du volume clos devient beaucoup plus influente entre 75% et 100% de liquide, la rigidité statique variant alors de 70 daN/mm à 340 daN/mm.

De plus, il est souvent nécessaire d'obtenir un accroissement de rigidité vers les efforts importants, afin de limiter les débattements de la tige de l'amortisseur, efforts correspondants aux zones (A") du diagramme de la figure 5. Dans les systèmes classiques, cette limitation des débattements est obtenue par des butées de type mécanique, alors que, dans l'invention, cette fonction est assurée par la compression du fluide de remplissage et est rendue modulable par la composition dudit fluide de remplissage, puisqu'elle varie de ± 10 millimètres pour 40 % de gaz et 60 % de liquide à ± 3,5 millimètres pour 100 % de liquide. La limitation des débattements se fait par conséquent, dans l'ensemble modulable de liaison élastique selon l'invention, sans contact mécanique, donc sans nuisance acoustique et sans risque d'usure.

Un autre intérêt de l'invention réside dans la possibilité d'ajuster la rigidité dynamique, également par le choix de la composition du fluide de remplissage, mais aussi par la géométrie interne du volume clos de l'ensemble modulable de liaison élastique, qui, par un brassage et un cisaillement plus ou moins important dudit fluide de remplissage, modifie les valeurs de la rigidité dynamique en fonction de la fréquence.

Le tableau 2 ci-après montre les résultats de rigidité dynamique (Kd), exprimés en Newton/millimètre, obtenus en fonction de la fréquence, sur une machine d'essais dynamiques, l'amplitude dynamique étant de ± 0,05 millimètres, pour un ensemble modulable de liaison élastique d'un volume clos de 150 cm3 environ avec deux types de remplissage, soit 10% d'air avec 90% de liquide et 100% de liquide, respectivement, en comparaison avec un système "témoin", c'est-à-dire un système de type classique, dans lequel les chambres annulaires constituant le volume clos sont laissées ouvertes, en communication avec l'atmosphère ; dans l'exemple cité, le dispositif comporte une chambre annulaire supérieure (11) ayant un volume de 80 cm3 et une chambre annulaire inférieure (12) d'un volume de 70 cm3 environ.

**Tableau 2.**

| Rigidité dynamique en fonction de la fréquence pour différentes compositions du fluide de remplissage | | | | | |
|---|---|---|---|---|---|
| Fréquence Hertz | Nature du remplissage | | | | |
| | Témoin 100 % gaz chambres ouvertes Kt (N/mm) | Ensemble modulable de liaison élastique | | | |
| | | 10 % gaz 90 % liquide | | 100 % liquide | |
| | | Kd1 | variation Kd1/Kt | Kd2 | variation Kd2/Kt |
| 2 | 650 | 1050 | 1,6 | 3660 | 5,6 |
| 20 | 682 | 1145 | 1,7 | 3827 | 5,6 |
| 50 | 701 | 1155 | 1,6 | 3914 | 5,6 |
| 100 | 725 | 1040 | 1,4 | 3990 | 5,5 |
| 150 | 755 | 850 | 1,1 | 4010 | 5,3 |
| 200 | 800 | 800 | 1,0 | 4100 | 5,1 |

Le tableau 2 met en évidence qu' une liaison élastique classique, dont les chambres sont en communication avec l'atmosphère, et dont la rigidité statique est 50 daN/mm, voit sa rigidité dynamique (Kt) varier seulement de 650 N/mm aux basses fréquences juqu'à 800 N/mm à 200 Hz, alors qu'un ensemble modulable de liaison élastique hydropneumatique, dont le fluide de remplissage du volume clos est composé de 10% de gaz et 90% de liquide et dont la rigidité statique est de 200 daN/mm, présente une rigidité dynamique au moins 1,4 fois plus élevée jusqu'à 100 Hz et qui tend à se rapprocher de celle la liaison élastique classique, pour les fréquences supérieures. Cette version du dispositif permet, par conséquent, pour une rigidité statique supérieure à celle du dispositif classique améliorant le comportement du véhicule, de disposer d'une rigidité dynamique équivalente et de valeur limitée dans la plage des fréquences élevées correspondant aux fréquences acoustiques. Ainsi est-il possible d'atteindre le meilleur compromis entre le comportement sur route et le confort acoustique.

L'ensemble hydraulique de liaison élastique, dont le volume clos est entièrement rempli de liquide et dont la rigidité statique est de 340 daN/mm, présente, lui, dans la totalité de la gamme de fréquences, une rigidité dynamique plus de 5 fois plus élevée que la liaison élastique classique.

Cette possibilité de modulation des rigidités statique et dynamique peut s'avérer très intéressante car, pour des rigidités dynamiques relativement proches, aux fréquences acoustiques de l'ordre de 150 Hz, il est possible de moduler, selon les besoins, les rigidités statiques de l'ensemble modulable de liaison élastique hydropneumatique entre 50 daN/mm et 80 daN/mm permettant de régler une suspension plus ou moins ferme en comportement, sans engendrer un surcroît de nuisance acoustique, par simple variation de la proportion de liquide, entre 0 et 80 %, dans le fluide de remplissage du volume clos.

A cet effet de modulation des rigidités statique et dynamique peut être ajouté un effet d'amortissement en utilisant un matériau visqueux comme constituant partiel ou total du fluide de remplissage du volume clos, ledit amortissement étant également modulable tant par le choix de la viscosité du composant que par sa proportion dans le fluide de remplissage.

Le fluide de remplissage du volume clos peut, en conséquence, selon les variantes de l'ensemble modulable de liaison élastique, être constitué d'un gaz seul, d'un gaz en présence d'un liquide, d'un liquide seul - homogène ou composé d'un mélange de deux constituants miscibles ou non de viscosités différentes - d'un matériau visqueux seul ou d'un matériau visqueux en présence d'un gaz.

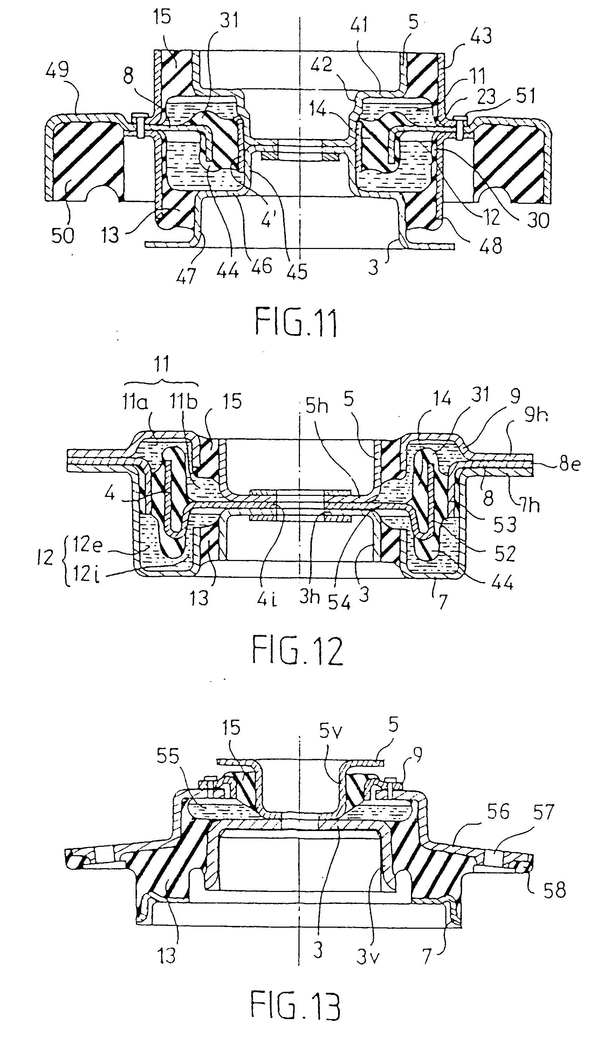

Les figures 6 à 12 décrivent différentes variantes de l'ensemble modulable de liaison élastique où le volume clos est constitué d'une chambre annulaire supérieure (11) et d'une chambre annulaire inférieure (12) et la figure 13 décrit une variante simplifiée dans laquelle le volume clos est constitué d'une chambre annulaire unique. Ces variantes présentent des configurations différentes, ou comportent des composants additionnels qui vont être décrits de manière détaillée, mais se comportent toutes selon le mécanisme de fonctionnement qui vient d'être explicité et se prêtent aux modulations de rigidités statique et dynamique ainsi qu'aux modulations d'amortissement par les moyens décrits.

La figure 6 met en évidence, sur une coupe axiale d'une variante hydropneumatique de l'ensemble modulable de liaison élastique selon l'invention, la présence de butées de fin de course en composition élastomérique.

La variante représente une structure semblable à celle de la figure 1, composée d'un assemblage à armatures annulaires supérieur (AS) et d'un assemblage à armatures annulaires inférieur (AI), le fluide de remplissage des chambres annulaires supérieure (11) et inférieure (12) étant constitué de liquide et de gaz.

Il s'agit donc, dans la présente figure également, d'un ensemble modulable de liaison élastique en version hydropneumatique.

Dans la variante représentée, les éléments de raccordement élastique inférieur (13), intermédiaire (14) et supérieur (15) comportent chacun une butée de fin de course, en composition élastomérique, respectivement (30), (31) et (32). Le rôle desdites butées de fin de course (30, 31, 32), est d'intervenir, comme contact de limitation de course, afin de brider les déflexions lors d'efforts importants de rebonds ou de chocs.

Dans ces circonstances, en effet, lorsque les éléments de raccordement élastique (13, 14, 15) ont été déformés après la variation de volume des chambres annulaires supérieure (11) et inférieure (12), la butée de fin de course (30) de l'élément de raccordement élastique inférieur (13), intimement liée à l'armature inférieure (7) vient en appui sur la face inférieure de l'armature de liaison interne (4), la butée de fin de course haute (31) de l'élément de raccordement élastique intermédiaire (14), intimement liée, elle, au sommet de la branche en angle (41) de l'armature de liaison interne (4), vient en appui sur la face interne de l'armature supérieure (9) et la butée de fin de course inférieure (32) de l'élément de raccordement élastique supérieur (15), qui est intimement liée à l'extrémité de la branche en angle (91) de l'armature supérieure (9), vient, elle, en appui sur la face supérieure de l'armature de liaison interne (4).

Lesdites butées de fin de course (30, 31, 32) sont donc parties intégrantes des éléments de raccordement élastique inférieur (13), intermédiaire (14) et supérieur (15) respectivement. La butée de fin de course (30) de l'élément de raccordement élastique inférieur (13) est disposée sur sa face formant le fond de la chambre annulaire inférieure (12) et située à l'opposé de la languette d'étanchéité (22).

D'une manière similaire, la butée de fin de course intermédiaire haute (31) est située sur la face de l'élément de raccordement élastique intermédiaire (14) formant le fond de la demi-chambre haute (11a) de la chambre annulaire supérieure (11) et à l'opposé de la languette supérieure d'étanchéité (25), comme la butée de fin de course (32) est située sur la face de l'élément de raccordement élastique supérieur (15) formant la paroi supérieure de la demi-chambre basse (11b) de la chambre annulaire supérieure (11) et à l'opposé de la languette d'étanchéité (23). Le contact de limitation de course s'opère entre la butée de fin de course (30) et la face inférieure de l'armature de liaison interne (4) ou soit entre la butée de fin de course intermédiaire basse (32) et la face supérieure de l'armature de liaison interne (4) soit entre la butée de fin de course haute (31) et la face inférieure de l'armature supérieure (9).

La disposition de la chambre annulaire supérieure (11) en deux demi-chambres haute (11a) et basse (11b) permet, par l'intermédiaire du passage (11c), un brassage du liquide contenu dans ladite chambre annulaire supérieure (11) qui permet d'abaisser la rigidification dynamique de l'ensemble modulable de liaison élastique. Bien évidemment, un tel effet n'est obtenu que dans les versions hydropneumatique ou hydroélastique du dispositif.

Le choix des paramètres de la géométrie dudit passage (11c) entre la demi-chambre haute (11a) et la demi-chambre basse (11b) permet de moduler l'effet d'abaissement de la rigidification dynamique et, par le choix judicieux de la viscosité du fluide de remplissage, de moduler, également, l'effet supplémentaire d'amortissement.

La figure 7 représente, en coupe axiale également, une autre variante de l'ensemble modulable de liaison élastique, en version pneumatique, comportant deux chambres annulaires de volume réduit et des butées de fin de course en composition élastomérique.

La structure du dispositif est voisine de celle de la figure 1 et comporte les mêmes constituants formant un assemblage à armatures annulaires supérieur (AS) et un assemblage à armatures annulaires inférieur (AI) ; le volume clos est notablement réduit par rapport à celui des variantes précédemment décrites, les éléments de raccordement élastique inférieur (13) et intermédiaire (14) étant beaucoup plus volumineux.

Dans la présente variante, la butée de fin de course (30) portée par l'élément de raccordement élastique inférieur (13) se trouve constituée d'une épaisseur notable de composition élastomérique. De ce fait, les parois de la chambre annulaire inférieure (12) sont ici constituées partiellement de la face inférieure de l'armature de liaison interne (4) et de la face inférieure de l'élément de raccordement élastique intermédiaire (14), en partie haute, les trois autres parois étant formées d'éléments en composition élastomérique, à savoir la languette d'étanchéité inférieure (24) de l'armature de liaison interne (4), la butée de fin de course (30) et la languette d'étanchéité (22) portée par l'élément de raccordement élastique inférieur (13).

Le fluide de remplissage du volume clos est ici constitué d'un gaz, l'ensemble modulable de liaison élastique fonctionnant par effet pneumatique associé à l'effet élastique produit par la déformation des éléments de raccordement élastique (13, 14, 15) constituant l'ensemble de raccordement en composition élastomérique (RE).

Lors de sollicitations en rebond ou en choc, la limitation des déplacements relatifs s'opère par contact de limitation de course, dans la chambre annulaire inférieure (12), entre la butée de fin de course (30) et la face inférieure de l'armature de liaison interne (4) ou, dans la chambre annulaire supérieure (11), soit entre la butée de fin de course haute (31) et la face interne de l'armature supérieure (9), soit entre la butée de fin de course (32) et la face supérieure de l'armature de liaison interne (4).

La figure 8 illustre, également en coupe axiale, une variante de l'ensemble modulable de liaison élastique dans laquelle le dispositif présente deux chambres annulaires non communicantes remplies de fluide constitué d'un matériau visqueux en présence de gaz, formant un ensemble hydropneumatique modulable.

Comme dans les variantes précédentes, le volume clos est réparti entre une chambre annulaire supérieure (11) enclose dans l'assemblage à armatures annulaires supérieur (AS) et une chambre annulaire inférieure (12) enclose dans l'assemblage à armatures annulaires inférieur (AI). Les éléments de raccordement élastique inférieur (13), intermédiaire (14) et supérieur (15) qui forment l'ensemble de raccordement en composition élastomérique (RE) peuvent comporter des butées de fin de course du type représenté sur les figures 6 et 7 ou en être démunis, comme représenté.

Le fluide de remplissage du volume clos est, dans cette variante, constitué d'un matériau visqueux en présence d'un gaz. La modulation des rigidités statique et dynamique se fait par le choix de la proportion des constituants, mais un effet supplémentaire d'amortissement est obtenu par la viscosité du matériau visqueux et est donc modulable selon ladite viscosité. Il est bien évident que le brassage du matériau visqueux dans le passage (11c) qui relie la demi-chambre haute (11a) à la demi-chambre basse (11b) de la chambre annulaire supérieure (11) et provoque un cisaillement dudit matériau visqueux ayant pour conséquence une chute de rigidité dynamique dans les fréquences croissantes est directement influencé par la viscosité dudit matériau visqueux comme par la définition géométrique du passage (11c).

L'amortissement, comme le gain en comportement dynamique, sont donc, eux aussi, modulables.

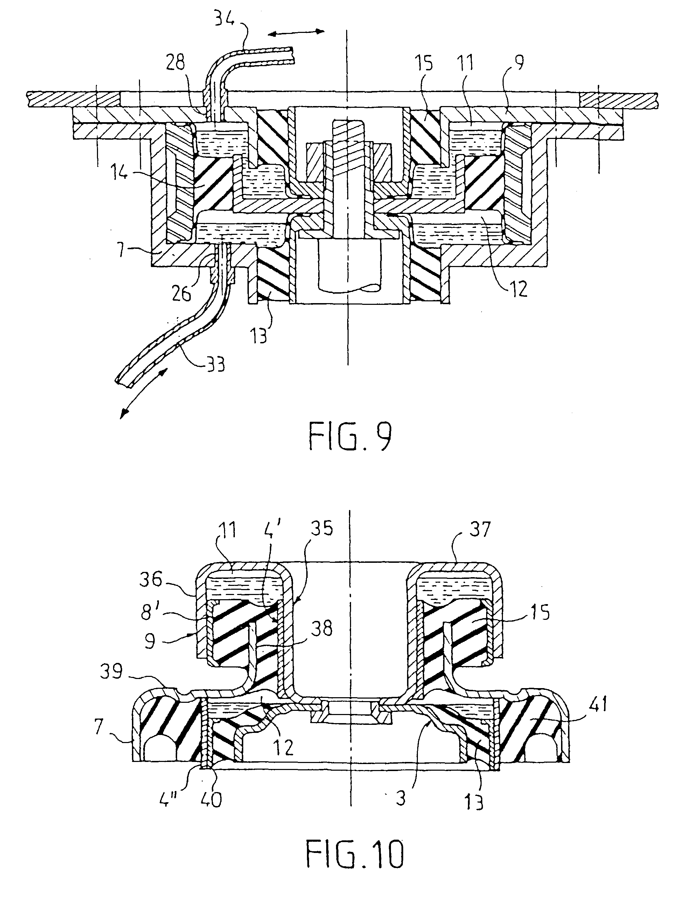

La figure 9 montre, en coupe axiale également, le raccordement des chambres annulaires (11, 12) constituant le volume clos à un système de gestion du fluide de remplissage dans un ensemble hydroélastique ou hydropneumatique modulable de liaison élastique selon l'invention.

Le dispositif présente une structure analogue à celle de la figure 1 mais est, en outre, équipé de canaux de liaison (33, 34) permettant de moduler la composition du fluide de remplissage du volume clos. Les chambres annulaires supérieure (11) et inférieure (12) sont, le plus souvent, toutes deux reliées au système de gestion du fluide de remplissage, comme représenté, mais il est bien évident qu'une seule des chambres annulaires pourrait comporter un tel raccordement.

Le canal de liaison inférieur (33) vient se substituer à l'obturateur (27) des versions précédentes pour mettre en communication, à travers l'orifice de remplissage (26) traversant l'armature inférieure (7), la chambre annulaire inférieure (12) avec le système de gestion du fluide de remplissage, comme le canal de liaison supérieure (34) vient se substituer à l'obturateur (29) pour relier la chambre annulaire supérieure (11) au même système de gestion du fluide de remplissage par l'intermédiaire de l'orifice (28) traversant l'armature supérieure (9). Les chambres annulaires (11, 12) ou les canaux de liaison (33, 34) sont munis de moyens d'obturation (non représentés), tels des clapets anti-retour ou des dispositifs assurant une fonction analogue, garantissant l'étanchéité desdites chambres annulaires (11, 12).

Le pilotage du fluide de remplissage du volume clos présente l'avantage d'autoriser l'adaptation des raideurs initiale et de saturation de l'ensemble modulable de liaison élastique, par exemple, au profil de roulage rencontré.

C'est ainsi que le système de gestion du fluide de remplissage est, le plus généralement, constitué d'un distributeur à plusieurs positions permettant de sélectionner les proportions relatives des composants du fluide de remplissage en fonction du profil de la chaussée.

Dans une variante, l'ensemble modulable de liaison élastique peut devenir un dispositif "actif", le système de gestion du fluide de remplissage devenant un ensemble de pilotage direct géré par les sollicitations provenant soit de l'amortisseur soit d'un autre organe participant au mouvement à amortir.

Que le système de gestion du fluide de remplissage soit ou non actif, les éléments de raccordement élastique inférieur (13), intermédiaire (14) et supérieur (15) peuvent comporter des butées de fin de courses ou en être dépourvus, comme illustré.

La figure 10 représente la coupe axiale d'un ensemble hydropneumatique de liaison élastique dont les armatures présentent une forme particulière.

L'assemblage à armatures annulaires supérieur (AS) est, dans cette variante, formé d'une armature supérieure (9), d'une armature de liaison supérieure interne (4') et d'une armature de liaison supérieure externe (8').

L'armature supérieure (9) présente une forme de double U inversé, dont le fût interne (35) est relié à la périphérie (36) par l'intermédiaire d'une zone annulaire (37).

Les deux armatures de liaison supérieures (4', 8') sont intimement liées à l'élément de raccordement élastique supérieur (15) par leurs faces internes.

Les parois de la chambre annulaire supérieure (11) sont alors formées par la zone annulaire (37) et la partie supérieure du fût interne (35) et de la périphérie (36) de l'armature supérieure (9) pour la partie haute et les flancs et par la face supérieure de l'élément de raccordement élastique supérieur (15), pour la partie basse.

Dans cette variante, la chambre annulaire supérieure (11) ne comporte pas de demi-chambres haute et basse, mais une seule cavité. Il n'y a donc pas de cisaillement du liquide par brassage entre deux demi-chambres et, par voie de conséquence, pas de réduction de la rigidité dynamique.

Les armatures de liaison supérieures interne (4') et externe (8') sont enserrées entre les faces internes de la périphérie (36) et du fût interne (35) de l'armature supérieure (9) pour le montage du dispositif.

L'élément d'assemblage à armatures annulaires inférieur (AI) est formé d'une armature inférieure interne (3), d'une armature intermédiaire inférieure (4") et d'une armature extérieure (7), en forme de S, dont le fût supérieur (38) est noyé dans la composition élastomérique constitutive de l'élément de raccordement élastique supérieur (15).

Les parois de la chambre annulaire inférieure (12) sont constituées par la partie de l'élément de raccordement élastique supérieur (15) comprise entre le fût supérieur (38) de l'armature extérieure (7) et l'armature de liaison re supérieure interne (4'), une partie du prolongement horizontal (39) dudit fût supérieur (38) et un élément de raccordement élastique inférieur (13), intimement lié à la face interne de l'armature inférieure interne (3) et à un renforcement rigide (40) interposé entre l'armature de liaison inférieure (4") et ledit élément de raccordement élastique inférieur (13). Entre le prolongement horizontal (39) du fût supérieur (38) de l'armature extérieure (7) et la périphérie de cette dernière, d'une part, et la face interne de l'armature de liaison inférieure (4"), d'autre part, et leur étant intimement lié est inséré un élément de raccordement élastique externe (41) également réalisé en composition élastomérique et destiné à la reprise élastique des charges.

Le report de charges se fait ainsi de manière découplée par rapport à la fixation sur la tige de l'amortisseur, seule différence dans le comportement de l'ensemble modulable de liaison élastique par rapport aux variantes précédentes.

Le dispositif illustré comporte un fluide de remplissage composé d'un liquide et d'un gaz, mais il est bien évident pour l'homme de l'art que, selon les nécessités de l'application, le fluide de remplissage peut être uniquement un gaz, conduisant alors à un ensemble modulable de liaison élastique à effet pneumatique ou uniquement un liquide de viscosité appropriée conduisant à une version hydroélastique du dispositif.

La figure 11 illustre une autre disposition particulière de l'ensemble modulable de liaison élastique, dans laquelle est inclus un élément de remplissage extérieur, en composition élastomérique, figure sur laquelle ont été omis les moyens de liaison à la structure à amortir.

Le dispositif comporte, comme les variantes précédentes, un volume clos constitué d'une chambre annulaire supérieure (11) et d'une chambre annulaire inférieure (12), ici représentées contenant un fluide de remplissage comportant un liquide en présence d'un gaz.

Les parois de la chambre annulaire supérieure (11), à cavité unique, sont formées par la face inférieure de l'élément de raccordement élastique supérieur (15) et par l'épaule (41) de l'armature supérieure interne (5) pour la partie haute, par la languette d'étanchéité (23) et par le prolongement vertical (42) de l'épaule (41) de l'armature supérieure interne (5), pour les flancs, et par la face supérieure de l'élément de raccordement élastique intermédiaire (14) et la face supérieure de l'armature de liaison externe (8), pour la partie basse.

L'élément de raccordement élastique supérieur (15) est intimement lié, par ses faces latérales, d'une part à l'armature supérieure interne (5) et d'autre part à une armature supérieure périphérique (43). L'élément de raccordement intermédiaire (14) est, lui, intimement lié à une armature de liaison interne (4') et à l'armature de liaison externe (8). Il comporte, en outre, deux butées de fin de course supérieure haute (31) et basse (44), toutes deux en composition élastomérique.

Les parois de la chambre annulaire inférieure (12) sont, ici, constituées, pour la partie haute, par la face inférieure de l'armature de liaison externe (8), pour les flancs, d'une part par la languette d'étanchéité (30) portée par l'élément de raccordement élastique inférieur (13) et d'autre part par le fût vertical interne (45) de l'armature inférieure interne (3), et pour la partie basse, par la face supérieure de l'élément de raccordement élastique inférieur (13) et par le prolongement horizontal (46) dudit fût vertical interne (45).

L'élément de raccordement élastique inférieur (13) est intimement lié, par ses faces latérales, d'une part à la jambe (47) de l'armature inférieure interne (3) et, d'autre part à une armature inférieure externe (48).

Le dispositif ainsi constitué comporte, en outre, un élément de remplissage (50), en composition élastomérique, destiné à la reprise des charges. Il est rendu solidaire du dispositif de liaison élastique par des moyens de fixation (51) permettant l'assemblage de l'armature périphérique inférieure (49) à laquelle est intimement lié l'élément de remplissage (50), à la fois sur les armatures supérieure et inférieure externes (43, 48) et sur l'armature de liaison externe (8).

Le fonctionnement de cette variante de l'ensemble modulable de liaison élastique est conforme à celui décrit par la courbe (H) de la figure 5, les butées de fin de course supérieure haute (31) et basse (44) portées par l'élément de raccordement élastique intermédiaire (14) venant, en cas de rebond ou de choc, en appui de limitation de course sur les faces internes respectivement de l'épaule (41) de l'armature supérieure interne (5) ou du prolongement horizontal (46) du fût vertical interne (45) de l'armature inférieure interne (3).

La figure 12 propose une autre variante de l'ensemble modulable de liaison élastique, en version hydropneumatique, dans laquelle le fluide de remplissage comporte une forte proportion de liquide.

Le volume clos de ce dispositif est constitué de deux chambres annulaires (11, 12) comportant chacune deux demi-chambres, haute (11a) et basse (11b) pour la chambre annulaire supérieure (11) et deux demi-chambres interne (12i) et externe (12e) pour la chambre annulaire inférieure (12).

La séparation entre les deux demi-chambres de chacune des chambres annulaires (11, 12) est ici réalisée par une disposition particulière de l'élément de raccordement élastique intermédiaire (14), dans laquelle est noyé le fût coudé (52) de l'armature de liaison interne (4) ainsi que le fût vertical (53) de l'armature de liaison externe (8), et qui comporte deux butées de fin de course, haute (31) et basse (44).

La face supérieure de l'élément de raccordement élastique inférieur (13) et la face inférieure de l'élément de raccordement élastique intermédiaire (14) délimitent, avec les faces internes de l'armature inférieure interne (3), de l'armature inférieure (7) et la face inférieure du fût horizontal (54) de l'armature de liaison interne (4), la chambre annulaire inférieure (12).

D'une manière similaire, la face inférieure de l'élément de raccordement élastique supérieur (15) et la face supérieure de l'élément de raccordement élastique intermédiaire (14) délimitent, avec les faces internes de l'armature supérieure interne (5), de l'armature supérieure (9), la face supérieure de l'armature de liaison externe (8) et la face supérieure du fût horizontal (54) de l'armature de liaison interne (4), la chambre annulaire supérieure (11).

La liaison entre les assemblages à armatures annulaires inférieur (AI) et supérieur (AS) est réalisée par l'intermédiaire d'une part de l'extrémité (4i) de l'armature de liaison interne (4) enserrée entre la face inférieure de l'extrémité horizontale (5h) de l'armature supérieure interne (5) et la face supérieure de l'extrémité horizontale (3h) de l'armature inférieure interne (3) et, d'autre part, de l'extrémité (8e) de l'armature de liaison externe (8) enserrée entre la face inférieure de l'extrémité horizontale (9h) de l'armature supérieure (9) et la face supérieure de l'extrémité horizontale (7h) de l'armature inférieure (7).

Dans la variante représentée, la composition du fluide de remplissage du volume clos est différente d'une chambre annulaire à l'autre. Dans la chambre annulaire supérieure (11), il est constitué d'environ 90% de liquide et 10% de gaz, alors que dans la chambre annulaire inférieure (12), la proportion de liquide est de 80% environ. Cette différence autorise, en fonctionnement, un réglage asymétrique du comportement de l'ensemble modulable de liaison élastique.

La figure 13 décrit une variante simplifiée de l'ensemble modulable de liaison élastique, en version hydropneumatique, dans laquelle le volume clos est constitué d'une chambre annulaire unique.

Cette simplification conduit, évidemment, à une efficacité moindre mais peut convenir pour la réalisation d'un dispositif d'un coût moins élevé susceptible de satisfaire des conditions d'utilisation moins exigeantes.

En effet, l'existence d'une chambre annulaire unique (55) permet de réduire le nombre des composants, l'ensemble de raccordement en composition élastomérique (RE) étant constitué seulement des éléments de raccordement élastique supérieur (15) et inférieur (13), montés respectivement entre la face externe du fût vertical (5v) de l'armature inférieure interne (5) et la face supérieure de l'armature supérieure (9) d'une part et entre les faces internes du fût vertical (3v) de l'armature inférieure interne (3), d'une armature périphérique supérieure (56), munie d'alésages (57) pour permettre l'assemblage, et de l'armature interne (7). Le dispositif comporte également un élément de raccordement élastique additionnel (58).

La chambre annulaire unique (55) contient un fluide de remplissage ici constitué de 70% environ de liquide et 30% de gaz.

La variante illustrée présente une chambre annulaire unique (55) placée dans la partie supérieure du dispositif et, par conséquent, plus efficace en cas de mouvements ascendants de la tige de l'amortisseur, donc en sollicitation de choc, mais il est bien évident pour l'homme de l'art que si l'amortissement des sollicitations de rebond devait être privilégiée, le dispositif serait conçu de manière à ce que la chambre annulaire unique (55) se trouve située dans la partie inférieure du dispositif.

Le mode de fabrication de la présente invention consiste en un moulage par les moyens classiques de l'industrie de transformation du caoutchouc, après traitement préalable des armatures en vue de leur adhésion aux éléments de raccordement élastique constituant l'élément de raccordement en composition élastomérique (RE). A cet effet, les différentes armatures reçoivent un traitement de dégraissage et une enduction par une couche primaire d'accrochage suivie d'une couche d'agent adhérisant.

Les armatures et les compositions élastomériques constitutives des éléments de raccordement élastique sont alors disposées dans l'empreinte d'un moule de forme appropriée qui est ensuite clos et placé sous une presse.

Sous l'influence de la pression et de la température se produisent, alors, simultanément, la réticulation des compositions élastomériques et leur adhérence aux armatures.

Refroidi, le dispositif est démoulé et passe ensuite à la phase de remplissage du volume clos, d'éventuelles opérations de finition pouvant venir compléter ces étapes.

L'élément modulable de liaison élastique est alors prêt à être livré au constructeur automobile en vue de son montage sur véhicule.

Par rapport aux dispositifs de l'art antérieur, l'élément modulable de liaison élastique selon l'invention présente l'avantage de permettre la modulation des caractéristiques par une modulation, partiellement indépendante, de la rigidité statique, de la rigidité et du gain dynamiques, une modulation de l'effet d'amortissement, un effet de limitation des débattements sans contact mécanique, une possibilité de pilotage de la composition du fluide de remplissage, pilotage qui peut être réalisé directement par les sollicitations de l'amortisseur conduisant, de ce fait, à un système actif de liaison élastique.

L'ensemble des dispositions décrites montre l'étendue de la gamme des possibilités de modulation des caractéristiques statiques et dynamiques offerte au concepteur pour optimiser l'ensemble modulable de liaison élastique selon les contraintes des cahiers des charges des constructeurs automobiles.

En outre, l'intérêt de la présente invention réside dans le fait que ses effets se font sans contact d'éléments mécaniques tels que ceux des systèmes classiques, qui sont souvent à l'origine de nuisances acoustiques en raison des phénomènes de frottements et d'accostage mécanique.

Enfin, le dispositif selon l'invention présente également l'avantage d'être insensible aux prises de coniques induites par la tige d'amortisseur, et conserve, dans ce cas, la même loi effort-déflexion, ce qui n'est pas le cas des dispositifs classiques.

L'homme de l'art pourra modifier l'agencement relatif des éléments constitutifs et apporter à l'ensemble modulable de liaison élastique selon l'invention différentes variantes de géométrie, sans sortir du cadre de l'invention comme décrit dans les revendications suivantes.

## Revendications

1. Méthode de modulation d'un ensemble modulable de liaison élastique interposé, pour filtrer les vibrations, entre la tige (6) d'un amortisseur (1) de véhicule et une structure (2) à amortir, ledit ensemble comprenant au moins deux armatures annulaires rigides dont l'une (3-5) est solidarisée avec la tige (6) et l'autre (7-9) avec la structure (2), lesdites armatures étant liées l'une à l'autre par au moins deux éléments annulaires élastomériques (13-15), qui délimitent entre eux un espace clos (11, 12, 55) contenant un fluide, le volume dudit espace clos étant modifié par la déformation sous contrainte desdits éléments annulaires élastomériques, l'espace clos étant totalement étanche par rapport à son environnement externe et ledit fluide comportant une phase gazeuse et au moins une phase liquide, caractérisée par le fait que la modulation des rigidités statique Ks et dynamique Kd dudit ensemble est obtenue par variation du rapport des volumes occupés par la phase gazeuse et la phase liquide, afin de régler une suspension plus ou moins ferme en comportement et de limiter les débattements de la tige (6) de l'amortisseur (1) pour les efforts importants, sans engendrer un surcroît de nuisance acoustique.

2. Méthode selon la revendication 1, caractérisée par le fait que l'espace clos est constitué par une chambre (55) annulaire unique, l'ensemble ne comprenant que deux éléments (13, 15) annulaires élastomériques.

3. Méthode selon la revendication 1, caractérisée par le fait que l'ensemble comprend trois éléments annulaires élastomériques et que l'espace clos est constitué par deux chambres (11, 12) annulaires non communiquantes, à savoir une chambre (11) annulaire supérieure, délimitée par un élément (15) annulaire élastomérique supérieur et par un élément (14) annulaire élastomérique intermédiaire, filtrant les vibrations dues aux chocs et une chambre (12) annulaire inférieure, délimitée par ledit élément (14) annulaire élastomérique intermédiaire et par un élément (13) annulaire élastomérique inférieur, filtrant les vibrations dues aux rebonds.

4. Méthode selon l'une des revendications 1 à 3, caractérisée par le fait que la phase liquide contenue dans l'espace clos comprend au moins deux composants de viscosités différentes.

5. Méthode selon l'une des revendications 1 à 4, caractérisée par le fait que la phase liquide contenue dans l'espace clos comprend au moins un matériau visqueux.

6. Méthode selon la revendication 3, caractérisée par le fait qu'au moins un des éléments annulaires élastomériques inférieur (13), intermédiaire (14) et supérieur (15) comprend au moins une butée de fin de course (30, 31, 31, 44) en composition élastomérique.

7. Méthode selon l'une des revendications 3 ou 6, caractérisée par le fait que le volume clos est relié à un système de gestion du fluide utilisé pour le remplissage dudit espace clos, afin de pouvoir moduler les rigidités statique et dynamique en fonction du profil routier par l'intermédiaire d'au moins un canal de liaison (33, 34) débouchant dans au moins une des chambres annulaires (11, 12) par un orifice de remplissage (26, 28) ménagé dans au moins une des armatures.

8. Méthode selon la revendication 7, caractérisée par le fait que le système de gestion du fluide utilisé pour le remplissage de l'espace clos est constitué par un distributeur à plusieurs positions.

9. Méthode selon la revendication 7, caractérisée par le fait que le système de gestion du fluide est constitué d'un dispositif de pilotage direct par les sollicitations générées par un mécanisme participant aux mouvements à amortir, ce qui constitue un ensemble modulable de liaison élastique actif.

10. Méthode selon la revendication 1, caractérisée par le fait qu'une des armatures annulaires rigides est liée à l'autre armature par trois éléments annulaires élastomériques espacés, lesdites armatures et les éléments annulaires élastomériques définissant deux chambres (11, 12) annulaires fermées étanches l'une par rapport à l'autre.

11. Méthode selon la revendication 10, caractérisée par le fait que l'une (11) desdites chambres annulaires est subdivisée en deux chambres (11a, 11b) annulaires plus petites, qui ne communiquent l'une avec l'autre que par un espace (11c) annulaire étroit.

12. Méthode selon la revendication 11, caractérisée par le fait que la chambre, qui est subdivisée en deux chambres plus petites, contient une phase liquide visqueuse, ladite phase liquide étant soumise au cisaillement lorsqu'elle passe à travers ledit espace (11c) annulaire étroit.

13. Méthode selon l'une des revendications précédentes, caractérisée par le fait que les éléments élastomériques annulaires (13-15) sont aptes à se déformer sous l'effet de sollicitations importantes transmises par la phase liquide incompressible du fluide de remplissage, cette déformation se traduisant par un bombement des faces des éléments élastomériques annulaires opposées au fluide comprimé, lequel bombement sert de butée de fin de course pouvant venir en contact avec une partie d'armature de la structure (2) et ainsi limiter les déformations.

## Claims

1. Method for modulating a modulable, interposed resilient-link assembly, to filter out vibrations, between the rod (6) of a vehicle shock absorber (1) and a structure (2) to be damped, said assembly comprising at least two rigid annular reinforcements, one of which (3-5) is made integral with the rod (6) and the other (7-9) with the structure (2), said reinforcements being linked to one another by at least two elastomeric annular members (13-15), which delimit between them an enclosed space (11, 12, 55) containing a fluid, the volume of said enclosed space being modified by the deformation under stress of said elastomeric annular members, the enclosed space being totally sealed with respect to its external environment and said fluid comprising a gaseous phase and at least one liquid phase, characterised by the fact that the modulation of the static Ks and dynamic Kd rigidity of said assembly is obtained by variation of the relationship of the volumes occupied by the gaseous phase and the liquid phase, in order to regulate a suspension that performs more or less firmly and to limit the clearance of the rod (6) of the shock absorber (1) for substantial efforts, without generating excessive acoustic nuisance.

2. Method according to Claim 1, characterised by the fact that the enclosed space is constituted by a single annular chamber (55), the assembly comprising only two elastomeric annular members (13, 15).

3. Method according to Claim 1, characterised by the fact that the assembly comprises three elastomeric annular members and that the enclosed space is constituted by two non-communicating annular chambers (11, 12), namely an upper annular chamber (11), delimited by an upper elastomeric annular member (15), and by an intermediate elastomeric annular member (14), filtering out the vibrations arising from shocks and a lower annular chamber (12), delimited by said intermediate elastomeric annular member (14) and by a lower elastomeric annular member (13), filtering out the vibrations arising from rebounds.

4. Method according to one of Claims 1 to 3, characterised by the fact that the liquid phase contained in the enclosed space comprises at least two components having different viscosity.

5. Method according to one of Claims 1 to 4, characterised by the fact that the liquid phase contained in the enclosed space comprises at least one viscous material.

6. Method according to Claim 3, characterised by the fact that at least one of the lower (13), intermediate (14) and upper (15) elastomeric annular members comprises at least one end stop (30, 31, 31, 44) made of elastomeric compound.

7. Method according to one of Claims 3 or 6, characterised by the fact that the enclosed volume is connected to a fluid management system used for filling said enclosed space, in order to be able to modulate static and dynamic rigidity as a function of the road profile through at least one linking channel (33, 34) leading out into at least one of the annular chambers (11, 12) via a filling orifice (26, 28) made in at least one of the reinforcements.

8. Method according to Claim 7, characterised by the fact that the fluid management system used for filling the enclosed space is constituted by a distributor with several positions.

9. Method according to Claim 7, characterised by the fact that the fluid management system is constituted by a direct driving device using the stresses generated by a mechanism participating in the movements to be damped, which constitutes a modulable, active resilient-link assembly.

10. Method according to Claim 1, characterised by the fact that one of the rigid annular reinforcements is linked to the other reinforcement by three elastomeric annular members spaced apart, said reinforcements and said elastomeric annular members defining two closed annular chambers (11, 12) sealed off from one another.

11. Method according to Claim 10, characterised by the fact that one (11) of said annular chambers is subdivided into two smaller annular chambers (11a, 11b), which communicate with one another only via a narrow annular space (11c).

12. Method according to Claim 11, characterised by the fact that the chamber, which is subdivided into two smaller chambers, contains a viscous liquid phase, said liquid phase being subject to shear when it passes through said narrow annular space (11c).

13. Method according to one of the preceding claims, characterised by the fact that the annular elastomeric members (13-15) are capable of being deformed under the effect of substantial stresses transmitted by the incompressible liquid phase of the filling fluid, this deformation resulting in a bulging of the faces of the annular elastomeric members opposite the compressed fluid, which bulging serves as an end stop that can come into contact with a portion of reinforcement of the structure (2) and thus limit the deformation.

## Patentansprüche

1. Modulationsverfahren für eine modulierbare elastische Verbindungseinheit, die zum Filtern von Schwingungen zwischen dem Schaft (6) eines Fahrzeugstoßdämpfers (1) und einem zu dämpfenden Aufbau (2) eingefügt ist, welche Einheit mindestens zwei ringförmige starre Beschläge umfaßt, von denen der eine (3-5) mit dem Schaft (6) und der andere (7-9) mit dem Aufbau (2) fest verbunden ist, wobei die Beschläge über mindestens zwei ringförmige Elastomer-Elemente (13-15) miteinander verbunden sind, die einen geschlossenen Raum (11, 12, 55) begrenzen, der ein Fluid enthält, wobei sich das Volumen des geschlossenen Raumes durch die unter Belastung entstehende Verformung der ringförmigen Elastomer-Elemente ändert, wobei der geschlossene Raum gegenüber seiner äußeren Umgebung völlig dicht ist und das Fluid eine gasförmige Phase und mindestens eine flüssige Phase enthält, dadurch gekennzeichnet, daß die Modulation der statischen Steifigkeit Ks und der dynamischen Steifigkeit Kd der Einheit durch die Veränderung des Verhältnisses des von der gasförmigen und der flüssigen Phase eingenommenen Volumens erreicht wird, um ein mehr oder weniger festes Verhalten der Aufhängung zu regeln und den Federungsweg des Schaftes (6) des Stoßdämpfers (1) bei großen Krafteinwirkungen zu begrenzen, ohne dadurch eine Zunahme der akustischen Belästigung hervorzurufen.

2. Verfahren nach Anspruch 1, dadurch kennzeichnet, daß der geschlossene Raum von einer einzelnen ringförmigen Kammer (55) gebildet wird, wobei die Einheit nur zwei ringförmige Elastomer-Elemente (13, 15) enthält.

3. Verfahren nach Anspruch 1, dadurch gekennzeichnet, daß die Einheit drei ringförmige Elastomer-Elemente enthält und daß der geschlossene Raum aus zwei ringförmigen, nicht miteinander in Verbindung stehenden Kammern (11, 12) gebildet wird, und zwar einer ringförmigen oberen Kammer (11), die von einem ringförmigen oberen Elastomer-Element (15) und einem ringförmigen dazwischengefügten Elastomer-Element (14) begrenzt wird, welche die durch Stöße verursachten Vibrationen filtert, und einer ringförmigen unteren Kammer (12), die vom dazwischengefügten Elastomer-Element (14) und einem ringförmigen unteren Elastomer-Element (13) begrenzt wird, welche die durch Zurückfedern verursachten Vibrationen filtert.

4. Verfahren nach einem der Ansprüche 1 bis 3, dadurch gekennzeichnet, daß die im geschlossenen Raum enthaltene flüssige Phase mindestens zwei Komponenten mit unterschiedlicher Viskosität aufweist.

5. Verfahren nach einem der Ansprüche 1 bis 4, dadurch gekennzeichnet, daß die im geschlossenen Raum enthaltene flüssige Phase mindestens ein viskoses Material aufweist.

6. Verfahren nach Anspruch 3, dadurch gekennzeichnet, daß mindestens eines der ringförmigen unteren (13), dazwischengefügten (14) und oberen (15) Elastomer-Elemente mindestens einen Endanschlag (30, 31, 31, 44) aus einer Elastomerzusammensetzung enthält.

7. Verfahren nach einem der Ansprüche 3 oder 6, dadurch gekennzeichnet, daß das geschlossene Volumen an ein Fluidsteuersystem angeschlossen ist, das zum Befüllen des geschlossen Raumes dient, um die statische und dynamische Steifigkeit in Abhängigkeit vom Fahrbahnprofil über mindestens einen Verbindungskanal (33, 34) regulieren zu können, der in mindestens eine der ringförmigen Kammern (11, 12) über eine Befüllöffnung (26, 28) mündet, die in mindestens einem der Beschläge ausgespart ist.

8. Verfahren nach Anspruch 7, dadurch gekennzeichnet, daß das Steuersystem für das zum Befüllen des geschlossenen Raums verwendete Fluid aus einem Verteiler mit mehreren Positionen gebildet wird.

9. Verfahren nach Anspruch 7, dadurch gekennzeichnet, daß das Steuersystem für das Fluid aus einer Einrichtung zur direkten Steuerung über Belastungen gebildet wird, die von einem an den zu dämpfenden Bewegungen beteiligten Mechanismus erzeugt werden, der eine modulierbare, aktive elastische Verbindungseinheit bildet.

10. Verfahren nach Anspruch 1, dadurch gekennzeichnet, daß einer der ringförmigen starren Beschläge mit dem anderen Beschlag über drei voneinander beabstandete ringförmige Elastomer-Elemente verbunden ist, wobei die Beschläge und die ringförmigen Elastomer-Elemente zwei Kammern (11, 12) definieren, die gegeneinander dicht abgeschlossen sind.

11. Verfahren nach Anspruch 10, dadurch gekennzeichnet, daß eine der ringförmigen Kammern (11) in zwei ringförmige kleinere Kammern (11a, 11b) unterteilt ist, die nur über einen engen ringförmigen Raum (11c) miteinander in Verbindung stehen.

12. Verfahren nach Anspruch 11, dadurch gekennzeichnet, daß die Kammer, die in zwei kleinere Kammern unterteilt ist, eine viskose flüssige Phase enthält, wobei die flüssige Phase beim Durchtritt durch den ringförmigen engen Raum (11c) einer Scherbeanspruchung ausgesetzt ist.

13. Verfahren nach einem der vorhergehenden Ansprüche, dadurch gekennzeichnet, daß die ringförmigen Elastomer-Elemente (13-15) sich unter der Einwirkung von großen Belastungen verformen können, die durch die nicht komprimierbare flüssige Phase des Befüllfluids übertragen werden, wobei diese Verformung sich durch Ausbeulen der dem komprimierten Fluid gegenüberliegenden Seiten der ringförmigen Elastomer-Elemente äußert, wobei diese Ausbeulung als Endanschlag dient, der mit einem Teil des Beschlags des Aufbaus (2) in Kontakt treten und somit die Verformungen begrenzen kann.
